# FASCICULE DE BREVET EUROPEEN

(11) **EP 0 782 937 B1**
(45) Date de publication et mention de la délivrance du brevet: **14.03.2001**
(21) Numéro de dépôt: 96118325.8
(22) Date de dépôt: 15.11.1996
(51) Int. Cl.: B60C 15/00, B60C 15/05

(54) **Pneumatique radial pour avion avec des bourrelets à deux tringles**
Radialer Flugzeugreifen mit doppeltem Wulstkern
Radial aircraft tyre with double bead cores

(30) Priorité: 08.12.1995 FR 9515689
(43) Date de publication de la demande: 09.07.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Pena, Jorge Fernando, Greenville - S.C. 29607 (US); Postic, Robert, 63000 Clermont-Ferrand (FR); Roux, Pierre, 63000 Clermont-Ferrand (FR)
(74) Mandataire: Devaux, Edmond-Yves

(56) Documents cités:
- DE-B- 1 080 886
- FR-A- 1 259 008
- FR-A- 2 672 848
- FR-E- 78 947
- US-A- 4 356 985
- PATENT ABSTRACTS OF JAPAN vol. 017, no. 679 (M-1527), 14 Décembre 1993 & JP 05 229305 A (BRIDGESTONE CORP), 7 Septembre 1993,

## Description

La présente invention concerne un pneumatique à armature de carcasse radiale, destiné à porter de lourdes charges, à être gonflé à de très fortes pressions et à rouler à grandes vitesses, ce qui est le cas d'un pneumatique pour avion.

Un tel pneumatique comprend généralement une armature de carcasse composée de plusieurs nappes de fils ou câbles de matériau textile faisant avec la direction circonférentielle des angles pouvant être compris entre 75° et 105°. Plusieurs de ces nappes sont ancrées à une tringle dans chaque bourrelet, en formant des retournements après enroulement autour de ladite tringle ; ces nappes sont dites retournées. Un profilé de mélange caoutchouteux à dureté élevée comble généralement l'espace formé entre lesdits retournements, les nappes de carcasse elles-mêmes et la tringle. Les nappes de carcasse restantes ont des profils radiaux qui longent, dans la région des bourrelets, la face axialement extérieure des retournements des nappes dites retournées pour se terminer soit à hauteur du centre de la tringle, soit sous ladite tringle, et ces nappes seront dites embarrées.

La présence de deux ou plusieurs tringles dans chaque bourrelet de pneumatique est largement connue dans le domaine des pneumatiques à nappes de carcasse croisées, dès que le nombre desdites nappes devient nécessairement élevé.

Le brevet FR 1 259 008 et son certificat d'addition N° 78 947 montrent et décrivent une application de ce principe en pneumatique radial, chaque bourrelet contenant deux tringles, et les nappes de carcasse étant toutes retournées autour de la tringle axialement intérieure, les retournements étant disposés entre les deux tringles et axialement à l'extérieur de la deuxième tringle.

Un autre exemple d'utilisation de bourrelet à deux tringles est donné dans le brevet FR 1 256 432. Ces exemples montrent que les carcasses peuvent être subdivisées en deux groupes, les unes étant ancrées à une première tringle, les autres à une deuxième tringle, ce qui présente l'énorme avantage de mieux répartir les contraintes de tension dans les nappes de carcasse. En outre et par le fait que la surface du siège de bourrelet ait été agrandie (largeur axiale plus grande), les pressions de contact entre la jante et le bourrelet sont mieux réparties et permettent d'éviter les phénomènes de rotation sur jante.

Le brevet US-A-4 356 985 montre un pneumatique présentant les caractéristiques du préambule de la revendication 1.

Bien qu'avantageuse, l'adoption de deux tringles ou plus dans chaque bourrelet d'un pneumatique pour avion, comprenant une armature de carcasse à plusieurs nappes de câbles radiaux, ne s'est pas montrée totalement satisfaisante en endurance dans des conditions de roulage très pénalisantes (roulages simulant les roulages sur taxiways ou tarmacs et décollages d'un avion), plus particulièrement au niveau des bourrelets.

Les exigences de sécurité sur les avions devenant de plus en plus sévères, les tests d'homologation devenant de plus en plus durs, il est nécessaire d'améliorer l'endurance en zone basse de tels pneumatiques.

Afin d'atteindre l'objectif énoncé ci-dessus, l'invention propose un pneumatique pour avion avec une bande de roulement, une armature de sommet, et une armature de carcasse radiale comprenant au moins deux nappes retournées de fils ou câbles textiles, ancrées dans chaque bourrelet à deux tringles , et au moins une nappe embarrée de fils ou câbles textiles, au moins une nappe retournée étant enroulée autour de chaque tringle en allant axialement de l'intérieur à l'extérieur pour former un retournement axialement extérieur, caractérisé en ce que le retournement de la nappe, axialement la plus intérieure et retournée autour de la tringle axialement intérieure, est sur une certaine portion radiale séparé de la nappe de carcasse, axialement la plus à l'intérieur et retournée autour de la tringle axialement à l'extérieur, par un profilé de mélange caoutchouteux en forme de croissant, dont l'extrémité radialement supérieure est située à une distance de la base du bourrelet comprise entre 0,15 et 0,30 fois la hauteur H du pneumatique et l'extrémité radialement inférieure comprise entre les deux droites, parallèles à la base du bourrelet et passant respectivement par le centre de la tringle axialement extérieure et le point de ladite tringle le plus éloigné de l'axe de rotation, l'épaisseur maximale dudit profilé étant au moins égale à 0,5 fois l'épaisseur totale des retournements de nappes de carcasse retournées autour de la tringle axialement intérieure.

De manière préférentielle, ledit profilé aura un module sécant d'extension à 100% d'allongement relatif au plus égal à 6 MPa, et, dans tous les cas, inférieur au module commun des profilés triangulaires situés directement au dessus des tringles d'ancrage, ledit module étant mesuré dans les mêmes conditions. De même, les nappes retournées autour de la tringle axialement intérieure ont des retournements dont les extrémités sont radialement échelonnées à des hauteurs comprises entre 0,55 H et 0,35 H, et la nappe axialement la plus à l'intérieur ayant l'extrémité de son retournement la plus proche de l'axe de rotation, alors que les nappes retournées autour de la deuxième tringle ont des retournements dont les extrémités sont radialement échelonnées à des hauteurs comprises entre 0,35 H et 0,10 H, la nappe axialement la plus à l'intérieur ayant le retournement dont l'extrémité est la plus éloignée de l'axe de rotation.

La (les) nappe(s) de carcasse embarrée(s), passant radialement sous les deux tringles, a(ont) de préférence son(leurs) extrémité(s) située(s) dans la pointe du bourrelet, qui est l'emplacement où les décollements d'extrémités sont moindres. Il en est de même de l'extrémité axialement intérieure et radialement inférieure de l'étroite nappe de renforcement, disposée avantageusement axialement et radialement à l'extérieur de l'ensemble des nappes de l'armature de carcasse, entre lesdites nappes et, d'une part, la paroi du bourrelet perpendiculaire à l'axe de rotation et, d'autre part, le siège de bourrelet, ladite nappe de renforcement ayant une extrémité radialement supérieure et axialement extérieure localisée, lorsque le pneumatique est monté sur sa jante de service, au dessous du rebord de jante, et étant préférentiellement formée de câbles en polyamide aromatique.

Il est particulièrement avantageux, toujours dans le but d'améliorer l'endurance des bourrelets et plus particulièrement des nappes de carcasse et des retournements en regard du rebord de jante, de disposer, axialement à l'extérieur du complexe formé par les retournements des nappes dites retournées et par les bords des nappes dites embarrées, et axialement à l'intérieur de la couche de mélange caoutchouteux, dite de protection et destinée à entrer en majeure partie en contact avec le rebord de jante, un profilé de caoutchouc ayant une forme de croissant, et dont l'épaisseur maximale, située sur la ligne perpendiculaire au profil extérieur du bourrelet sensiblement rectiligne et passant par l'extrémité du profilé en forme de croissant, situé entre le retournement de la nappe axialement la plus à l'intérieur et retournée autour de la tringle axialement à l'intérieur et la nappe de carcasse la plus à l'intérieur et retournée autour de la tringle axialement à l'extérieur, est comprise entre 1 et 2,5 fois l'épaisseur du complexe défini ci-dessus.

De manière avantageuse, le mélange caoutchouteux constituant ledit profilé a un module sécant d'extension mesuré à 100% d'allongement relatif, compris entre 4 MPa et 5 MPa, et équivalent au module, mesuré dans les mêmes conditions, du mélange constituant le profilé situé entre les retournements des nappes retournées autour de la tringle axialement intérieure et les nappes retournées autour de la tringle axialement extérieure.

A l'extérieur du bourrelet, la couche dite de protection, d'épaisseur sensiblement constante pour sa partie en regard du rebord de jante, sera préférentiellement formée de deux qualités de mélange caoutchouteux : une première qualité, allant de la pointe du bourrelet à la partie arrondie du talon et formant le siège de bourrelet destiné à entrer en contact avec le siège de jante, est définie par un module d'extension à 100% d'allongement relatif au moins égal à 3,5 MPa; une deuxième qualité s'étendant radialement de l'arrondi du talon jusqu'au dessus de l'extrémité radialement supérieure du profilé axialement extérieur à la nappe embarrée, est définie par un module d'extension, mesuré dans les mêmes conditions que ci-dessus, compris entre 2,5 MPa et 3,5 MPa.

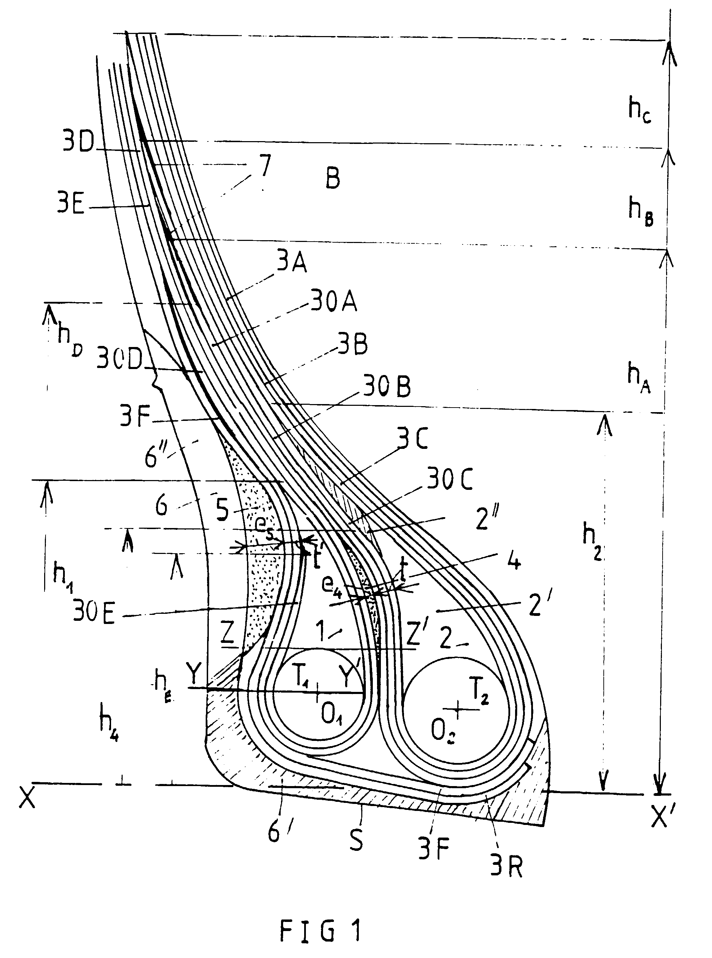

Les caractéristiques et avantages de l'invention seront mieux compris à l'aide de la description qui suit et qui se réfère au dessin, illustrant un exemple d'exécution sur lequel la figure unique 1 représente, vu en section méridienne, un bourrelet de pneumatique conforme à l'invention.

Le bourrelet B du pneumatique de dimension 46 x 17.0 R 20 AIR X comprend deux tringles de type "tressée" T₁, axialement extérieure, et T₂ axialement intérieure, toutes les deux étant de section transversale circulaire et dont les centres de gravité O₁, O₂ définissent une droite 0₁O₂ sensiblement parallèle à la génératrice du siège S de bourrelet B. Les sections transversales des deux tringles T₁, T₂ ne sont pas égales du fait, que leurs résistances à la traction, fonction du nombre et de la tension des nappes d'armature de carcasse qui sont enroulées autour d'elles, ont des valeurs différentes. Autour de la tringle axialement intérieure T₂ sont enroulées axialement de l'intérieur à l'extérieur trois nappes (3A à 3C) de l'armature de carcasse (3), pour former axialement à l'extérieur les retournements (30A à 30C), dont les extrémités sont distantes de la base du bourrelet, représentée par la ligne XX' (droite parallèle à l'axe de rotation passant par le point d'intersection de la génératrice de siège de bourrelet avec la paroi du rebord de jante perpendiculaire audit axe de rotation), des hauteurs h_{A}, h_{B}, h_{C}, respectivement égales à 0,52 H, 0,45 H, 0,38 H, H étant la hauteur de l'armature de carcasse du pneumatique considéré, distance mesurée dans le plan équatorial entre la fibre moyenne de ladite armature et la ligne XX'. Les hauteurs h_{A}, h_{B}, h_{C} sont telles que la hauteur h_{C} du retournement (30C) de la nappe de carcasse (3C), enroulée autour de la tringle axialement intérieure T₂ et axialement la plus à l'extérieur, soit la plus grande et différente de la hauteur h_{B} du retournement (30B) de la nappe de carcasse (3B) enroulée autour de la tringle T₂ et adjacente axialement à la nappe (3C) d'une distance h_{C} - h_{B} comprise entre 10 et 25 mm. Il en est de même de la distance h_{B} -h_{A}. Les hauteurs h_{A}, h_{B}, h_{C} sont toutes supérieures à la distance h₂ séparant l'extrémité radialement supérieure du profilé sensiblement triangulaire (2) surmontant la tringle T₂, cette distance h₂ étant égale à 0,28 H. Autour de la tringle T₁, axialement extérieure, sont enroulées axialement de l'intérieur à l'extérieur deux autres nappes (3D, 3E) de câbles textiles, pour former axialement à l'extérieur des retournements (30D, 30E), l'extrémité du retournement (30D) de la nappe (3D) axialement la plus à l'intérieur étant située à une distance h_{D} de la droite XX', d'une part supérieure à la distance h_{E} séparant l'extrémité du retournement (30E) de la nappe (3E) de la droite XX' et d'autre part supérieure à la distance h₁ séparant l'extrémité radialement supérieure du profilé (1), sensiblement triangulaire surmontant la tringle T₁, de ladite droite XX', h_{E} étant inférieure à h₁.

Entre le retournement (30A) de la nappe (3A), axialement la plus à l'intérieur et enroulée autour de la tringle T₂ axialement intérieure, et la nappe de carcasse (3D) enroulée autour de la tringle T₁ axialement extérieure, est disposé un profilé (4) ayant une forme de croissant, dont l'extrémité radialement supérieure est située à une distance h₄ de la droite XX', égale à 0,18 H dans le cas décrit, et dont l'extrémité radialement inférieure est située radialement entre la droite YY' parallèle à l'axe de rotation et passant par le centre de gravité O₁ de la section transversale de la tringle T₁ et la droite ZZ' parallèle à l'axe de rotation passant par le point de la tringle T₁ le plus éloigné dudit axe. L'épaisseur maximale e₄ de ce profilé (4) est égale à 0,6 fois l'épaisseur totale t des trois retournements (30A à 30C) des nappes (3A à 3C).

Ce profilé (4) est constitué d'un mélange caoutchouteux vulcanisé dont le module sécant d'extension à 100% d'allongement relatif est égal à 5 MPa, ce qui est, comparativement au module commun des profilés triangulaires (1) et (2) surmontant radialement les tringles T₁ et T₂, très inférieur, puisque ce dernier est égal à 10 MPa.

Outre les cinq nappes (3A à 3E), une nappe axialement extérieure et embarrée (3F) complète l'armature de carcasse (3). Ladite nappe (3F) recouvre axialement à l'extérieur les nappes (3D) et (3E) ainsi que leurs retournements (30E) et (30F), pour venir passer sous les tringles T₁ et T₂ en s'accolant aux parties de nappes de carcasse radialement sous tringles et avoir une extrémité située axialement à l'intérieur de la droite perpendiculaire à l'axe de rotation et passant par le centre O₂ de la tringle T₂ et radialement à l'intérieur de la droite parallèle à l'axe de rotation et passant par ledit point O₂. La nappe (3F) est, dans sa partie inférieure, renforcée par une nappe additionnelle de renforcement (3R) en câbles de polyamide aromatique, orientés à 85° par rapport à la direction circonférentielle du pneumatique, l'extrémité radialement supérieure de ladite nappe étant telle qu'elle soit localisée, lorsque le pneumatique est monté sur sa jante de service, au dessus du rebord de jante, l'extrémité radialement inférieure étant proche de mais légèrement décalée par rapport à l'extrémité de la nappe (3F) de l'armature (3).

L'ensemble constitué par les retournements (30D, 30E), la nappe (3F) et la nappe (3R) de renforcement sont, au niveau de la hauteur du sommet du rebord de jante, fortement concaves, du fait de la présence, outre la couche protectrice (6) extérieure de bourrelet, et entre ladite couche (6) et l'ensemble défini ci-dessus, d'un profilé (5) de forme sensiblement triangulaire isocèle dont l'extrémité radialement inférieure est localisée sensiblement sur la ligne ZZ' parallèle à l'axe de rotation et tangente à la tringle T₁ axialement extérieure en son point le plus éloigné de l'axe de rotation, et dont l'épaisseur maximale e₅ est sensiblement sur la même ligne parallèle à l'axe de rotation que l'extrémité du retournement 30E de la nappe 3E. Ladite épaisseur e₅ est égale à 2,1 fois l'épaisseur t' de l'ensemble (30D, 3F), et dans le cas décrit égale à 9 mm, c'est-à-dire très supérieure à l'épaisseur e₄ du profilé (4). Ledit profilé (5) est composé du même mélange caoutchouteux que celui qui compose le profilé (4) et son module d'extension à 100% d'allongement relatif est égal à 5 MPa.

La couche protectrice (6), entourant extérieurement le bourrelet B, est composée de deux portions de qualités différentes de caoutchouc : la première portion (6') s'étendant de la pointe du bourrelet jusqu'à l'extrémité radialement supérieure de la partie arrondie du talon de bourrelet, est composée d'un mélange de caoutchouc dont le module sécant d'extension à 100% d'allongement relatif est au moins égal à 3,5 MPa, la seconde portion (6"), prolongeant radialement la première portion et s'étendant jusqu'à une hauteur sensiblement égale au double de la hauteur du rebord de jante, est composée d'un mélange de caoutchouc dont le module d'extension, mesuré dans les mêmes conditions, est égal à 3,0 MPa, et présentant en outre, par rapport au mélange de la première portion une moins bonne adhérence sur métal, ce qui permet d'éviter d'une part la rotation sur jante et, d'autre part les cassures des portions de la couche de protection prenant fortement appui sur les rebords de jante.

L'exemple, conforme à l'invention et décrit ci-dessus, concerne un bourrelet à deux tringles, surmontées radialement de profilés de forme sensiblement triangulaire et constitués d'un même matériau caoutchouteux. On ne sort pas du cadre de l'invention en choisissant deux qualités différentes de mélange de caoutchouc respectivement pour les profilés (1) et (2). Il est même avantageux de choisir pour un même profilé (1) et/ou (2) deux qualités de caoutchouc différentes par leurs propriétés : le profilé (2) est par exemple constitué d'une première partie (2') dite principale, radialement inférieure, sous forme de triangle, et directement en contact avec la tringle T₂, et d'une deuxième partie (2") dite secondaire, radialement supérieure, sous forme de croissant, et située au-dessus de ladite première partie. La première partie (2') est constituée d'un mélange de forte dureté Shore A, comme connu en soi, la deuxième partie étant quant à elle constituée d'un mélange de plus faible dureté que la précédente.

Il reste évident que les bords de tous les retournements (30A à 30E) des nappes (3A à 3E) de l'armature de carcasse (3) sont découplées des nappes de câbles textiles avoisinantes par des couches de découplement (7), ces couches permettant d'avoir entre les câbles de nappes axialement adjacentes, les plus sensibles à dégradation, une épaisseur de mélange caoutchouteux supérieure à l'épaisseur existante entre les câbles des mêmes nappes, mesurée par exemple dans la région du sommet du pneumatique. Si la distance séparant les câbles, due à la seule présence des mélanges de calandrage est de 0,5 mm, elle devient dans la zone des extrémités de retournements de carcasse, due à la présence des couches supplémentaires de découplement, égale à une valeur comprise entre 0,8 et 1,0 mm.

A été testé sur un volant d'essai un pneumatique conforme à l'invention, comparativement à un pneumatique comprenant deux tringles d'ancrage dans chaque bourrelet et le même nombre de nappes d'armature de carcasse, les unes étant retournées, les autres étant embarrées, mais sans le croissant entre les deux tringles. Sous des conditions de roulage correspondant à et simulant des décollages sous charge nominale et à très grande vitesse, des roulages à faible vitesse sur "taxiway", et des décollages sous très forte surcharge, les pneumatiques conformes à l'invention ont aisément réalisé le nombre de cycles exigé par le test d'homologation TSO 62d, alors que les pneumatiques usuels avec le même nombre de nappes de carcasse et deux tringles sans le croissant de gomme n'ont pu satisfaire ledit test.

## Revendications

1. Pneumatique pour avion avec une bande de roulement, une armature de sommet, et une armature de carcasse radiale (3) comprenant au moins deux nappes retournées (3A, 3B, 3C, 3D, 3E) de fils ou câbles textiles, ancrées dans chaque bourrelet B à deux tringles (T₁, T₂), et au moins une nappe embarrée (3F) de fils ou câbles textiles, au moins une nappe retournée (3A, 3B, 3C, 3D, 3F) étant enroulée autour de chaque tringle (T₁, T₂) en allant axialement de l'intérieur à l'extérieur pour former un retournement axialement extérieur (30A, 30B, 30C, 30D, 30E), caractérisé en ce que le retournement de la nappe, axialement la plus intérieure (30A) et retournée autour de la tringle axialement intérieure T₂, est sur une certaine portion radiale séparé de la nappe de carcasse (3D), axialement la plus à l'intérieur et retournée autour de la tringle axialement à l'extérieur T₁, par un profilé (4) de mélange caoutchouteux en forme de croissant, dont l'extrémité radialement supérieure est située à une distance h₄ de la base XX' du bourrelet comprise entre 0,15 et 0,30 fois la hauteur H du pneumatique, et l'extrémité radialement inférieure comprise entre les deux droites YY' et ZZ', parallèles à la base XX' de bourrelet et passant respectivement par le centre O₁ de la tringle T₁ et le point de ladite tringle le plus éloigné de l'axe de rotation, l'épaisseur maximale e₄ dudit profilé (4) étant au moins égale à 0,5 fois l'épaisseur totale t des retournements (30A, 30B, 30C) de nappes de carcasse (3A, 3B, 3C) retournées autour de la tringle axialement intérieure T₂.

2. Pneumatique selon la revendication 1, caractérisé en ce que le profilé (4) a un module sécant d'extension à 100% d'allongement relatif inférieur au module commun des profilés triangulaires (1) et (2) situés directement au dessus des tringles d'ancrage T₁ et T₂, et au plus égal à 6,0 MPa.

3. Pneumatique selon l'une des revendications 1 ou 2, caractérisé en ce que les nappes retournées (3A, 3B, 3C) autour de la tringle T₂ axialement intérieure ont des retournements (30A, 30B, 30C) dont les extrémités sont radialement échelonnés à des hauteurs comprises entre 0,55 H et 0,35 H, et la nappe axialement la plus à l'intérieur (3A) ayant l'extrémité de son retournement (30A) la plus proche de l'axe de rotation, alors que les nappes retournées (3D, 3E) autour de la deuxième tringle T₁ ont des retournements (30D, 30E) dont les extrémités sont radialement échelonnées à des hauteurs comprises entre à 0,35 H et 0,10 H, la nappe axialement la plus à l'intérieur (3D) ayant le retournement (30D) dont l'extrémité est la plus éloignée de l'axe de rotation.

4. Pneumatique selon l'une des revendications 1 à 3, caractérisé en ce que la (les) nappe(s) de carcasse (3F) embarrée(s), passant radialement sous les deux tringles a (ont) de préférence son (leurs) extrémité(s) située(s) dans la pointe du bourrelet.

5. Pneumatique selon l'une des revendications 1 à 4, caractérisé en ce que chaque bourrelet B comprend en outre, axialement et radialement à l'extérieur des nappes de carcasse enroulées et embarrées, une nappe additionnelle de renforcement (3R) en câbles de polyamide aromatique, orientés à 85° par rapport à la direction circonférentielle du pneumatique, l'extrémité axialement extérieure et radialement supérieure de ladite nappe étant telle qu'elle soit localisée, lorsque le pneumatique est monté sur sa jante de service, au dessous du rebord de jante, l'extrémité radialement inférieure et axialement intérieure étant située dans la pointe du bourrelet.

6. Pneumatique selon l'une des revendications 1 à 5, caractérisé en ce qu'est disposé, axialement à l'extérieur du complexe formé par les retournements (30D, 30E) des nappes retournées (3D, 3E) et par les bords des nappes dites embarrées (3F), et axialement à l'intérieur de la couche de mélange caoutchouteux (6), dite de protection de bourrelet et destinée à entrer en majeure partie en contact avec le rebord de jante, un profilé (5) de mélange de caoutchouc sous forme de croissant et dont l'épaisseur maximale e₅, située sur la ligne perpendiculaire au profil extérieur du bourrelet sensiblement rectiligne et passant par l'extrémité du profilé (4) en forme de croissant, situé entre le retournement de la nappe (3A) axialement la plus à l'intérieur et retournée autour de la tringle T₂ axialement à l'intérieur et la nappe de carcasse (3D) la plus à l'intérieur et retournée autour de la tringle T₁ axialement à l'extérieur, est comprise entre 1 et 2,5 fois l'épaisseur t' du complexe défini ci-dessus, et dont l'extrémité radialement inférieure est localisée sensiblement sur la ligne ZZ' parallèle à l'axe de rotation et tangente à la tringle T₁ axialement extérieure en son point le plus éloigné de l'axe de rotation.

7. Pneumatique selon l'une des revendications 1 à 6, caractérisé en ce que la couche protectrice (6) entourant extérieurement le bourrelet B est composée de deux portions de qualités différentes de caoutchouc : une première portion (6') s'étendant de la pointe du bourrelet jusqu'à l'extrémité radialement supérieure de la partie arrondie du talon de bourrelet, composée d'un mélange de caoutchouc dont le module sécant d'extension à 100% d'allongement relatif est au moins égal à 3,5 MPa, une seconde portion (6"), prolongeant radialement la première portion et s'étendant jusqu'à une hauteur sensiblement égale au double de la hauteur du rebord de jante, composée d'un mélange de caoutchouc dont le module d'extension, mesuré dans les mêmes conditions, est compris entre 2,5 MPa et 3,5 MPa.

## Patentansprüche

1. Flugzeug-Luftreifen mit einer Lauffläche, einer Scheitelbewehrung und einer radialen Karkassenbewehrung (3), die mindestens zwei umgeschlagene Lagen (3A, 3B, 3C, 3D, 3E) aus Textildrähten oder -seilen aufweist, die in jedem Wulst (B) mit zwei Wulstkernen (T1, T2) verankert sind, und mit mindestens einer angesetzten Lage (3F) aus Textildrähten oder -seilen, wobei mindestens eine umgeschlagene Lage (3A, 3B, 3C, 3D, 3F) dadurch um jedem Wulstkern (T₁, T₂) gewickelt ist, daß sie axial von innen nach außen verläuft, um einen axial außenliegenden Umschlag (30A, 30B, 30C, 30D, 30E) zu bilden, dadurch gekennzeichnet, daß der Umschlag der Lage, die axial am weitesten innenliegt (30A) und rund um den axial innenliegenden Wulstkern T₂ herumgeschlagen ist, über einen bestimmten radialen Abschnitt von der Karkassenlage (3D), die axial am weitesten innenliegt und um den axial außenliegenden Wulstkern T₁ herumgeschlagen ist, durch ein hörnchenförmiges Profil (4) aus gummiartiger bzw. gummihaltiger Mischung getrennt ist, dessen radial oberes Ende unter einem Abstand h₄ von der Basis XX' des Wulstes gelegen ist, der zwischen dem 0,15- und dem 0,30-fachen der Höhe H des Reifens beträgt, und dessen radial unteres Ende zwischen zwei Geraden YY' und ZZ' liegt, die zur Basis XX' des Wulstes parallel sind und durch die Mitte O₁ des Wulstkernes T₁ bzw. den Punkt des genannten Wulstkernes hindurchlaufen, der von der Drehachse am weitesten entfernt ist, wobei die maximale Dicke e₄ des genannten Profils (4) mindestens gleich dem 0,5-fachen der Gesamtdicke t der Umschläge (30A, 30B, 30C) der Karkassenlagen (3A, 3B, 3C) ist. die rund um den axial innenliegenden Wulstkern T₂ herumgeschlagen sind.

2. Reifen nach Anspruch 1, dadurch gekennzeichnet, daß das Profil (4) einen Sekanten-Dehnungsmodul bei 100% relativer Längung aufweist, der kleiner ist als der gemeinsame Modul der dreieckigen Profile (1) und (2), die unmittelbar über den Verankerungs-Wulstkernen T₁ und T₂ gelegen sind, und höchstens 6.0 MPa beträgt.

3. Reifen nach einem der Ansprüche 1 oder 2, dadurch gekennzeichnet, daß die rund um den axial innenliegenden Wulstkern T₂ herumgeschlagenen Lagen (3A, 3B, 3C) Umschläge (30A, 30B, 30C) aufweisen, deren Enden radial in Höhen gestaffelt angeordnet sind, die zwischen 0,55 H und 0,35 H liegen, und daß die axial am weitesten innenliegende Lage (3A) mit dem Ende ihres Umschlags (30A) der Drehachse am nächsten liegt, während die Lagen (3D, 3E), die um den zweiten Wulstkern T₁ herumgeschlagen sind, Umschläge (30D, 30E) aufweisen, deren Enden radial gestaffelt in Höhen angeordnet sind, die zwischen 0,35 H und 0,10 H liegen, wobei die axial am weitesten innenliegende Lage (3D) einen Umschlag (30D) aufweist, dessen Ende von der Drehachse am weitesten entfernt ist.

4. Reifen nach einem der Ansprüche 1 bis 3, dadurch gekennzeichnet, daß die angesetzte(n) Karkassenlage(n) (3F) radial unter den beiden Wulstkernen hindurchläuft bzw. hindurchlaufen und bevorzugt mit ihrem Ende in der Spitze des Wulstes sitzt bzw. sitzen.

5. Reifen nach einem der Ansprüche 1 bis 4, dadurch gekennzeichnet, daß jeder Wulst B außerdem axial und radial außerhalb der herumgeschlagenen und angesetzten Karkassenlagen eine zusätzliche Verstärkungslage (3R) aus Seilen aus einem aromatischen Polyamid aufweist, die in Bezug auf die Umfangsrichtung des Reifens unter 85° ausgerichtet sind, wobei das axial äußere und radial obere Ende der genannten Lage so angeordnet ist, daß es, wenn der Reifen auf seiner Betriebsfelge angebracht ist, über dem Felgenrand sitzt, während das radial untere und axial innere Ende in der Spitze des Wulstes sitzt.

6. Reifen nach einem der Ansprüche 1 bis 5, dadurch gekennzeichnet, daß axial außerhalb des Komplexes, der von den Umschlägen (30D, 30E) der umgeschlagenen Lagen (3D, 3E) und von den Rändern der sogenannten angesetzten Lagen (3F) gebildet ist, und axial innerhalb der Gummimischungsschicht (6), die Schutzschicht des Wulstes genannt und dazu bestimmt ist, mit dem größten Teil in Berührung mit dem Felgenrand zu treten, ein hörnchenförmiges Profil (5) aus Gummimischung angeordnet ist und dessen maximale Dicke e₅, gelegen auf der Linie, die senkrecht zum Außenprofil des Wulstes im wesentlichen geradlinig verläuft und durch das Ende des hörnchenförmigen Profils (4) hindurchläuft, das zwischen dem axial am weitesten innenliegenden und um den axial innenliegenden Wulstkern T₂ herumgeschlagenen Umschlag der Lage (3A) und der Karkassenlage (3D) liegt, die am weitesten innenliegt und um den axial außenliegenden Wulstkern T₁ herumgeschlagen ist, zwischen dem 1- und dem 2,5-fachen der Dicke t' des oben definierten Komplexes liegt, und dessen radial unteres Ende im wesentlichen auf der Linie ZZ' liegt, die parallel zur Drehachse verläuft und den axial aussenliegenden Wulstkern T₁ in seinem Punkt tangiert, der von der Drehachse am weitesten entfernt ist.

7. Reifen nach einem der Ansprüche 1 bis 6, dadurch gekennzeichnet, daß die Schutzschicht (6), die außen den Wulst (6) umgibt, aus zwei Teilen mit unterschiedlicher Gummiqualität zusammengesetzt ist: einem ersten Teil (6'), der sich von der Spitze des Wulstes bis zum Ende erstreckt, das radial über dem abgerundeten Teil der Wulstferse liegt, der zusammengesetzt ist aus einer Gummimischung, deren Sekanten-Dehnungsmodul bei 100% relativer Längung mindestens gleich 3,5 MPa ist, und einem zweiten Teil (6"), der radial den ersten Teil verlängert und sich bis zu einer Höhe erstreckt, die im wesentlichen gleich ist dem Doppelten der Höhe des Felgenrandes und der zusammengesetzt ist aus einer Gummimischung, deren Dehnungsmodul, gemessen unter denselben Bedingungen, zwischen 2,5 MPa und 3,5 MPa liegt.

## Claims

1. A tyre for aircraft comprising a tread, a crown reinforcement and a radial carcass reinforcement (3) comprising at least two turned-up plies (3A, 3B, 3C, 3D, 3E) of textile cords or cables, anchored within each bead B to two bead wires (T₁, T₂), and at least one barred ply (3F) of textile cords or cables, at least one turned-up ply (3A, 3B, 3C, 3D, 3F) being wound around each bead wire (T₁, T₂), axially from the inside to the outside to form an axially outer upturn (30A, 30B, 30C, 30D, 30E), characterised in that the upturn of the ply (30A) which is axially innermost and turned up around the axially inner bead wire T₂ is, over a certain radial portion, separated from the carcass ply (3D) which is axially innermost and turned up around the axially outer bead wire T₁, by a crescent-shaped profiled member (4) of rubber mix, the radially upper end of which is located at a distance h₄ from the base XX' of the bead of between 0.15 and 0.30 times the height H of the tyre and the radially lower end of which is located between the two straight lines YY' and ZZ' which are parallel to the base XX' of the bead and pass respectively through the centre Oᵢ of the bead wire T₁ and the point of said bead wire farthest from the axis of rotation, the maximum thickness e₄ of said profiled member (4) being at least equal to 0.5 times the total thickness t of the upturns (30A, 30B, 30C) of the carcass plies (3A, 3B, 3C) which are turned up around the axially inner bead wire T₂.

2. A tyre according to Claim 1, characterised in that the profiled member (4) has a secant modulus of extension at 100% relative elongation which is lower than the common modulus of the triangular profiled members (1) and (2) located directly above the anchoring bead wires T₁ and T₂, and at most equal to 6.0 MPa.

3. A tyre according to one of Claims 1 or 2, characterised in that the plies (3A, 3B, 3C) turned up around the axially inner bead wire T₂ have upturns (30A, 30B, 30C) the ends of which are radially staggered at heights of between 0.55 H and 0.35 H, and the axially innermost ply (3A) having the end of its upturn (30A) closest to the axis of rotation, while the plies (3D, 3E) turned up around the second bead wire T₁ have upturns (30D, 30E) the ends of which are radially staggered at heights of between 0.35 H and 0.10 H, the axially innermost ply (3D) having the upturn (30D) the end of which is farthest from the axis of rotation.

4. A tyre according to one of Claims 1 to 3, characterised in that the barred carcass ply (plies) (3F), extending radially beneath the two bead wires, preferably has (have) its (their) end(s) located within the toe of the bead.

5. A tyre according to one of Claims 1 to 4, characterised in that each bead B furthermore comprises, axially and radially to the outside of the wound and barred carcass plies, an additional reinforcement ply (3R) of cables of aromatic polyamide, oriented at 85° relative to the circumferential direction of the tyre, the axially outer and radially upper end of said ply being such that it is located, when the tyre is mounted on its operating rim, below the rim flange, the radially lower and axially inner end being located within the toe of the bead.

6. A tyre according to one of Claims 1 to 5, characterised in that there is arranged, axially to the outside of the complex formed by the upturns (30D, 30E) of the turned-up plies (3D, 3E) and by the edges of the so-called barred plies (3F), and axially to the inside of the so-called bead-protecting layer of rubber mix (6) intended to come into contact for a major part with the rim flange, a crescent-shaped profiled member (5) of rubber mix, and the maximum thickness e₅ of which, located on the line perpendicular to the substantially rectilinear outer profile of the bead and passing through the end of the crescent-shaped profiled member (4), located between the upturn of the axially innermost ply (3A) which is turned up around the axially inner bead wire T₂ and the innermost carcass ply (3D) which is turned up around the axially outer bead wire T₁, lies between 1 and 2.5 times the thickness t' of the complex defined above, and the radially lower end of which is located substantially on the line ZZ' parallel to the axis of rotation and tangent to the axially outer bead wire T₁ at its point farthest from the axis of rotation.

7. A tyre according to one of Claims 1 to 6, characterised in that the protective layer (6) surrounding the bead B on the outside is composed of two portions of different qualities of rubber: a first portion (6'), extending from the toe of the bead to the radially upper end of the rounded part of the heel of the bead, composed of a rubber mix, the secant modulus of extension of which at 100% relative elongation is at least equal to 3.5 MPa, a second portion (6"), radially extending the first portion and extending up to a height substantially equal to twice the height of the rim flange, composed of a rubber mix, the modulus of extension of which, measured under the same conditions, is between 2.5 MPa and 3.5 MPa.
